# EUROPÄISCHE PATENTSCHRIFT

(11) **EP 1 508 489 B1**
(45) Veröffentlichungstag und Bekanntmachung des Hinweises auf die Patenterteilung: **03.07.2013**
(21) Anmeldenummer: 04017778.4
(22) Anmeldetag: 27.07.2004
(51) Int. Cl.: B61D 17/10, B62D 25/20

(54) **Fussboden eines grossräumigen Fahrzeuges zur Personenbeförderung, insbesondere eines Schienenfahrzeuges**
Floor of a vehicle carrying a large number of passengers, in particular a rail vehicle
Plancher d'un véhicule destiné au transport d'un grand nombre de passagers, en particulier d'un véhicule ferroviaire

(30) Priorität: 18.08.2003 DE 10337930
(43) Veröffentlichungstag der Anmeldung: 23.02.2005
(73) Patentinhaber: Siemens Aktiengesellschaft, 80333 München (DE)
(72) Erfinder: Höft, Hans-Walter, 52146 Würselen (DE); Stoll, Klaus, 41372 Niederkrüchten (DE)

(56) Entgegenhaltungen:
- EP-A1- 0 063 214
- EP-A1- 0 576 394
- EP-A2- 1 193 165
- WO-A-00/76822
- DE-A1- 2 908 823
- DE-A1- 4 129 716
- DE-A1- 19 858 230
- FR-A- 2 337 798

## Beschreibung

Die Erfindung betrifft einen Fußboden eines großräumigen Fahrzeuges zur Personenbeförderung, insbesondere eines Schienenfahrzeuges, mit einem vorzugsweise als Strangpressprofil ausgebildeten Fußbodenträger und einer oberen Fußbodenplatte, die über eine in Längs-, Quer- und Aufwärtsrichtung wirksame Abhebesicherung mit dem Fußbodenträger verbunden ist.

Aus den Druckschriften EP-A-0 063 214, FR-A-2 337 798, EP-A1-0 576 394 und DE-A1-41 29716 gehen Fußbodenaufbauten für Schienenfahrzeuge mit Befestigungseinrichtungen hervor. Dabei zeigt die EP-A-0 063 214 einen Aufbau mit einer nach oben geöffneten C-Befestigungsschiene, an der beispielsweise Fahrzeugsitze anbringbar sind. Diese Befestigungsschiene ist jedoch ohne Funktion im Hinblick auf eine Befestigung des Fußbodens selbst. Die übrigen zitierten Druckschriften des Standes der Technik stellen den technischen Hintergrund der Erfindung dar und zeigen verschiedene Ausführungsformen von Fußbodenaufbauten, die insbesondere schwingungstechnisch von einer Tragestruktur entkoppelt sind.

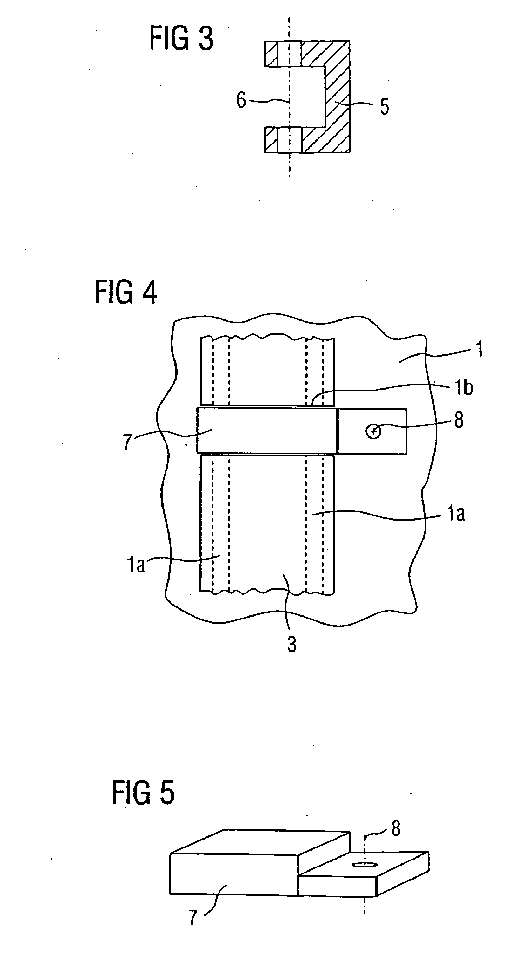

Bei einem durch die DE 196 26 256 A1 bekannten Fußboden mit den vorgenannten Merkmalen ist die mit einem Gehbelag versehene Fußbodenplatte über als Distanzelemente eingesetzte Schaumstoffmatten auf dem Fußbodenträger abgestützt. Einem Verschieben und einem Abheben der Fußbodenplatte selbst bei Extrembelastungen (Unfall) wird durch Abhebesicherungen entgegengewirkt, die gemäß Fig. 5 und 6 jeweils einen Sicherungsbolzen aufweisen. Ein Kopf dieses Bolzens wirkt mit einem am Fußbodenträger angebrachten Sicherungsprofil zusammen. Das andere Ende des Sicherungsbolzens ist in eine Verstärkungsplatte eingeschraubt, die mit der Fußbodenplatte verbunden ist. Eine solche mehrteilige Abhebesicherung, die zudem an mehreren Stellen zwischen dem Fußbodenträger und der Fußbodenplatte angeordnet sein muss, ist hinsichtlich der Herstellung und der Montage aufwändig. Die DE 196 26 256 A1 befasst sich insbesondere mit den Problemen der Schalldämpfung und der Wärmeisolierung. In dieser Schrift ist jedoch nicht beschrieben oder dargestellt, ob Ausrüstungsteile des Fahrzeuges - wie z. B. Fahrgastsitze, Trennwände oder Toilettenmodule - an der Oberseite des Fußbodens platziert sind.

Die DE 34 15 848 A1 offenbart ein Schienenfahrzeug mit einem Fußboden, dessen Fußbodenplatte unter Anordnung einer elastischen Zwischenschicht auf dem Fußbodenträger ruht, der durch eine Stahlkonstruktion (Querträger und Wellblech) gebildet ist. Für die Befestigung der erwähnten Fahrgastsitze als Ausrüstungsteile oberhalb des Fußbodens sind Schrauben 9 vorgesehen. Für diese Schrauben hat die Fußbodenplatte Durchgangsbohrungen und an ihrer Unterseite mittels Senkschrauben befestigte Halteplatten aus Stahl, die Gewindebohrungen enthalten. Eine Abhebesicherung, die einen Versatz der Fußbodenplatte in Längs-, Quer- und Aufwärtsrichtung verhindert, ist der DE 34 15 848 A1 nicht zu entnehmen.

Der Erfindung liegt daher die Aufgabe zugrunde, einen Fahrzeugfußboden der gattungsgemäßen Art in seinem Aufbau wesentlich zu vereinfachen, wobei eine möglichst geringe Anzahl von Bauteilen eingesetzt werden soll und eine schnelle Montierbarkeit erreichbar ist.

Diese Aufgabe wird erfindungsgemäß dadurch gelöst, dass an einer Oberseite des Fußbodenträgers seitlich angeordnete Ansätze von einem C-förmig gestalteten Längsprofil umgriffen sind, an dem die Fußbodenplatte befestigt ist, wobei das Längsprofil gegenüber den Ansätzen des Fußbodenträgers in Fahrzeuglängsrichtung arretiert ist.

Bei dem Gegenstand nach der Erfindung ist die in Längs-, Quer- und Aufwärtsrichtung wirksame Abhebesicherung in günstiger Weise allein durch die Ansätze und das Längsprofil gebildet, in den Fußbodenaufbau integriert und schnell montierbar.

Vorteilhafte Ausgestaltungen der Erfindung sind in den Unteransprüchen angegeben.

Ausführungsbeispiele der Erfindung sind in der Zeichnung schematisch dargestellt und werden im folgenden näher erläutert. Es zeigen
- Fig. 1: einen Fahrzeugfußboden im Schnitt quer zur Fahrzeuglängsachse (siehe Linie I - I in Fig. 2),
- Fig. 2: eine Draufsicht zu Fig. 1, wobei die Fußbodenplatte weggelassen ist,
- Fig. 3: das in Fig. 2 verwendete Verriegelungselement als Einzelteil im Querschnitt,
- Fig. 4: eine zu den Fig. 1 und 2 alternative Ausführung in einer Draufsicht, ebenfalls ohne Fußbodenplatte,
- Fig. 5: das in Fig. 4 verwendete Verriegelungselement als Einzelteil in perspektivischer Darstellung.

Der Fahrzeugboden hat einen als Strangpressprofil ausgebildeten unteren Fußbodenträger 1, an dessen Oberseite eine C-Schiene mit seitlichen Ansätzen 1a angeformt ist. Der Fahrzeugboden umfasst weiter eine obere Fußbodenplatte 2, die aus Sperrholz besteht und mit einem Gehbelag versehen sein kann. Die seitlichen Ansätze 1a des Fußbodenträgers 1 sind von einem ebenfalls C-förmig gestalteten Längsprofil 3 aus bevorzugt Aluminium umgriffen, das in Fahrzeuglängsrichtung durchläuft. Alternativ können in Fahrzeuglängsrichtung mehrere Längsprofile 3 hintereinander angeordnet sein. Zwischen den Ansätzen 1a und dem Längsprofil 3 ist eine als Schall- und Wärmedämmung wirksame Elastomerschicht 9 angeordnet.

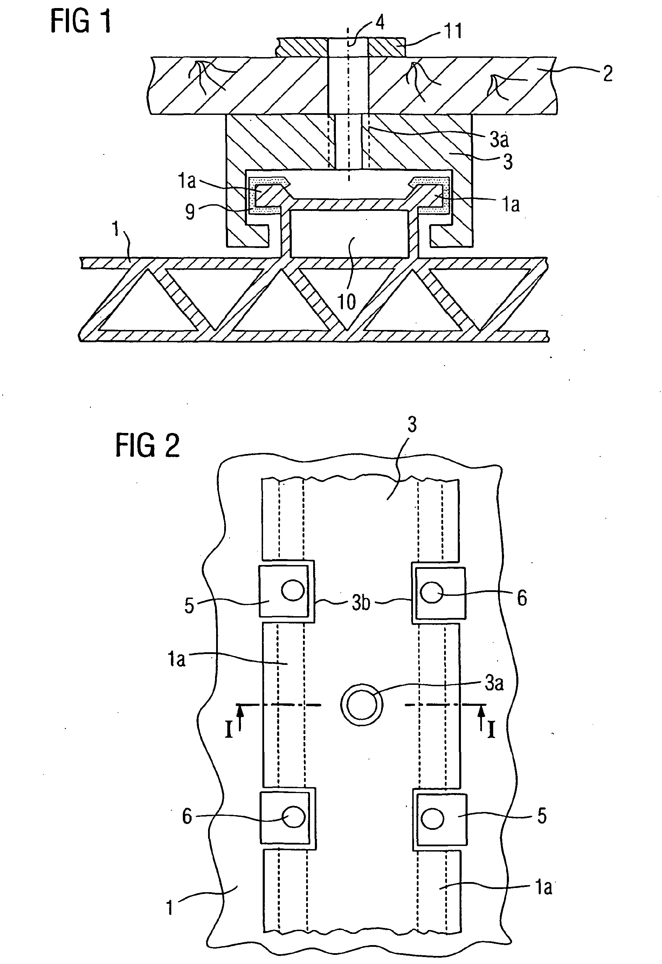

Die Befestigung der Fußbodenplatte 2 am Längsprofil 3 erfolgt durch in Fig. 1 nur mit ihrer Wirklinie gezeigte Schrauben 4, die jeweils einen bodenseitigen Anschluss 11 eines Fahrzeugausrüstungsteiles - wie beispielsweise Fahrgastsitz, Trennwand oder Toilettenmodul - sowie die Fußbodenplatte 2 durchgreifen und in Gewindebohrungen 3a des Längsprofils 3 gehaltert sind. Es empfiehlt sich, die Gewindebohrungen 3a erst bei der Montage des Fahrzeugausrüstungsteiles passgenau zu erstellen. Durch einen zwischen dem Längsprofil 3 und der C-Schiene des Fußbodenträgers befindlichen Freiraum 10 ist sichergestellt, dass das Bohrwerkzeug nicht anläuft und dadurch dessen Standzeit hoch ist. Die vorteilhaft allein durch die Ansätze 1a und das Längsprofil 3 gebildete, in den Fußbodenaufbau integrierte und schnell montierbare Abhebesicherung ist in Fahrzeugquerrichtung und vor allem auch in Aufwärtsrichtung wirksam, so dass selbst bei einem Umkippen des Fahrzeuges aufgrund eines Unfalls die Verbindung der Fußbodenplatte 2 und der darauf montierten Fahrzeugausrüstungsteile mit dem Fußbodenträger 1 erhalten bleibt.

Um die vorgenannte Abhebesicherung zusätzlich in Fahrzeuglängsrichtung zu nutzen, sind nachstehend drei Ausführungsmöglichkeiten beschrieben, die jeweils auf dem Gedanken basieren, das Längsprofil 3 in Fahrzeuglängsrichtung zu arretieren. Gemäß Fig. 2 und 3 ist für das Arretieren des Längsprofils 3 ein U-förmig ausgeführtes Verriegelungselement 5 vorgesehen, das in eine Ausnehmung 3b des Längsprofils 3 eingesetzt ist. Dabei umgreift das Verriegelungselement 5, einen der Ansätze 1a des Fußbodenträgers 1 und ist mit diesem Ansatz 1a kraftübertragend verbunden, beispielsweise durch einen Stift 6. Das U-förmige Verriegelungselement 5 kann aus einem Strangpressprofil oder aus einem gebogenen Metallblech gebildet sein. Nach einer nicht dargestellten Abwandlung ist zumindest ein Verriegelungselement vorgesehen, das in eine Ausnehmung 3b des Längsprofils 3 eingesetzt ist und in eine Ausnehmung in einem der Ansätze 1a des Fußbodenträgers 1 eingreift. Als Sicherung gegen ein Herausfallen dieses Verriegelungselements dient beispielsweise eine im Fußbodenträger 1 gehaltene Schraube. Nach der aus Fig. 4 und 5 ersichtlichen Möglichkeit für das Arretieren des Längsprofils 3 in Fahrzeuglängsrichtung ist zumindest ein Verriegelungsbauteil 7 vorgesehen, das zwischen zwei Längsprofile (3) eingesetzt ist und formschlüssig in einer Quernut 1b in den C-förmigen Ansätzen 1a des Fußbodenträgers 1 einliegt. Eine im Fußbodenträger 1 gehaltene Schraube 8 sichert das Verriegelungsbauteil 7 gegen Herausfallen.

Die gezeichneten Spiele zwischen den einzelnen Bauteilen (z. B. in Fig. 1 das Spiel zwischen den Ansätzen 1a des Fußbodenträgers 1 und dem Längsprofil 3) sind bewusst groß dargestellt, um das Zusammenwirken leichter erkennen zu können. Es versteht sich, dass diese Spiele in der Wirklichkeit geringer sind.

## Patentansprüche

1. Fußboden eines großräumigen Fahrzeuges zur Personenbeförderung, insbesondere eines Schienenfahrzeuges, mit einem vorzugsweise als Strangpressprofil ausgebildeten Fußbodenträger (1) und einer oberen Fußbodenplatte (2), die über eine in Längs-, Quer- und Aufwärtsrichtung wirksame Abhebesicherung mit dem Fußbodenträger (1) verbunden ist, **dadurch gekennzeichnet, dass** an einer Oberseite des Fußbodenträgers (1) seitlich angeordnete Ansätze (1a) von einem C-förmig gestalteten Längsprofil (3) umgriffen sind, an dem die Fußbodenplatte (2) befestigt ist, wobei das Längsprofil (3) gegenüber den Ansätzen (1a) des Fußbodenträgers (1) in Fahrzeuglängsrichtung arretiert ist.

2. Fußboden nach Anspruch 1,
**dadurch gekennzeichnet, dass** die Befestigung der Fußbodenplatte (2) am Längsprofil (3) durch Schrauben (4) erfolgt, die jeweils einen bodenseitigen Anschluss (11) eines Fahrzeugausrüstungsteiles (wie beispielsweise Fahrgastsitz, Trennwand oder Toilettenmodul) sowie die Fußbodenplatte (2) durchgreifen und in Gewindebohrungen (3a) des Längsprofils (3) gehaltert sind.

3. Fußboden nach Anspruch 1 oder 2,
**dadurch gekennzeichnet, dass** für das Arretieren des Längsprofils (3) in Fahrzeuglängsrichtung zumindest ein U-förmig ausgeführtes Verriegelungselement (5) vorgesehen ist, das in eine Ausnehmung (3b) des Längsprofils (3) eingesetzt ist, einen der Ansätze (1a) des Fußbodenträgers (1) umgreift und mit diesem Ansatz (1a) kraftübertragend verbunden ist, beispielsweise durch einen Stift (6).

4. Fußboden nach Anspruch 3,
**dadurch gekennzeichnet, dass** das U-förmige Verriegelungselement (5) aus einem Strangpressprofil oder aus einem gebogenen Metallblech gebildet ist.

5. Fußboden nach Anspruch 1 oder 2,
**dadurch gekennzeichnet, dass** für das Arretieren des Längsprofils (3) in Fahrzeuglängsrichtung zumindest ein Verriegelungselement vorgesehen ist, das in eine Ausnehmung (3b) des Längsprofils (3) eingesetzt ist und in eine Ausnehmung in einem der Ansätze (1a) des Fußbodenträgers (1) eingreift und gegen Herausfallen gesichert ist, beispielsweise durch eine im Fußbodenträger (1) gehaltene Schraube.

6. Fußboden nach Anspruch 1 oder 2,
**dadurch gekennzeichnet, dass** für das Arretieren des Längsprofils (3) in Fahrzeuglängsrichtung zumindest ein Verriegelungsbauteil (7) vorgesehen ist, das zwischen zwei Längsprofile (3) eingesetzt ist, formschlüssig in einer Quernut (1b) in den C-förmigen Ansätzen (1a) des Fußbodenträgers (1) einliegt und gegen Herausfallen gesichert ist, beispielsweise durch eine im Fußbodenträger (1) gehaltene Schraube (8).

7. Fußboden nach einem der Ansprüche 1 bis 6,
**dadurch gekennzeichnet, dass** zwischen den Ansätzen (1a) des Fußbodenträgers (1) und dem Längsprofil (3) eine Elastomer-schicht (9) angeordnet ist.

## Claims

1. Floor of a large-capacity vehicle for conveying people, in particular of a rail vehicle, with a floor support (1) which is preferably in the form of an extruded profile, and with an upper floor panel (2) which is connected to the floor support (1) via an anti-lift device which is effective in the longitudinal, transverse and upwards directions, **characterized in that** lugs (1a) arranged laterally on an upper side of the floor support (1) are engaged around by a longitudinal profile (3) which is configured in a C-shaped manner and to which the floor panel (2) is fastened, wherein the longitudinal profile (3) is locked in relation to the lugs (1a) of the floor support (1) in the longitudinal direction of the vehicle.

2. Floor according to Claim 1, **characterized in that** the floor panel (2) is fastened to the longitudinal profile (3) by screws (4) which each reach through a base connection (11) in a vehicle equipment part (such as, for example, passenger seat, partition or toilet module) and through the floor panel (2) and are secured in threaded bores (3a) in the longitudinal profile (3).

3. Floor according to Claim 1 or 2, **characterized in that** at least one locking element (5) of U-shaped design is provided for locking the longitudinal profile (3) in the longitudinal direction of the vehicle, said locking element being inserted into a recess (3b) of the longitudinal profile (3), engaging around one of the lugs (1a) of the floor support (1) and being connected in a force-transmitting manner to said lug (1a), for example by a pin (6).

4. Floor according to Claim 3, **characterized in that** the U-shaped locking element (5) is formed from an extruded profile or from a bent metal sheet.

5. Floor according to Claim 1 or 2, **characterized in that** at least one locking element is provided for locking the longitudinal profile (3) in the longitudinal direction of the vehicle, said locking element being inserted into a recess (3b) of the longitudinal profile (3) and engaging in a recess in one of the lugs (1a) of the floor support (1) and being secured against dropping out, for example by means of a screw held in the floor support (1).

6. Floor according to Claim 1 or 2, **characterized in that** at least one locking component (7) is provided for locking the longitudinal profile (3) in the longitudinal direction of the vehicle, said locking component being inserted between two longitudinal profiles (3), lying in a form-fitting manner in a transverse groove (1b) in the C-shaped lugs (1a) of the floor support (1) and being secured against dropping out, for example by means of a screw (8) held in the floor support (1).

7. Floor according to one of Claims 1 to 6, **characterized in that** an elastomer layer (9) is arranged between the lugs (1a) of the floor support (1) and the longitudinal profile (3).

## Revendications

1. Plancher d'un véhicule à grand compartiment pour le transport de personnes, notamment d'un véhicule sur rail, comprenant un support (1) de plancher constitué de préférence sous la forme d'un profilé filé et un plateau ( 2 ) supérieur de plancher, qui est assemblé au support ( 1 ) de plancher par un dispositif de sécurité vis-à-vis de l'enlèvement, efficace dans la direction longitudinale, transversale et ascendante, **caractérisé en ce que** des épaulements ( 1a ), disposés latéralement sur un côté supérieur du support ( 1 ) de plancher, sont pris par un longeron ( 3 ) qui est de forme en C, et sur lequel le plateau ( 2 ) de plancher est fixé, le longeron ( 3 ) étant bloqué dans la direction longitudinale du véhicule par rapport aux épaulements ( 1a ) du support ( 1 ) de plancher.

2. Plancher suivant la revendication 1,
**caractérisé en ce que**
la fixation du plateau ( 2 ) de plancher sur le longeron ( 3 ) s'effectue par des vis ( 4 ), qui traversent respectivement un assemblage ( 11 ), du côté du plancher, d'une partie d'équipement du véhicule ( comme par exemple un siège de passager, une cloison ou un module de toilette ) ainsi que le plateau ( 2 ) de plancher et sont retenues dans des taraudages ( 3a ) du longeron ( 3 ).

3. Plancher suivant la revendication 1 ou 2,
**caractérisé en ce que**
il est prévu pour le blocage du longeron ( 3 ) dans la direction longitudinale du véhicule au moins un élément ( 5 ) de verrouillage, qui est réalisé en forme de U, qui est inséré dans un évidement ( 3b ) du longeron ( 3 ), qui prend l'un des épaulements du support ( 1 ) du plancher et qui est relié avec transmission de force à cet épaulement ( 1a ), par exemple par une cheville ( 6 ).

4. Plancher suivant la revendication 3,
**caractérisé en ce que**
l'élément ( 5 ) de verrouillage en forme de U est formé d'un profilé filé ou d'une tôle métallique coudée.

5. Plancher suivant la revendication 1 ou 2,
**caractérisé en ce qu'**il est prévu, pour le blocage du longeron ( 3 ) dans la direction longitudinale du véhicule, au moins un élément de verrouillage, qui est inséré dans un évidement ( 3b ) du longeron ( 3 ), qui pénètre dans un évidement de l'un des épaulements ( 1a ) du support ( 1 ) du plancher et qui est empêché de tomber, par exemple par une vis retenue dans le support ( 1 ) du plancher.

6. Plancher suivant la revendication 1 ou 2,
**caractérisé en ce qu'**il est prévu, pour le blocage du longeron ( 3 ) dans la direction longitudinale du véhicule, au moins un composant ( 7 ) de verrouillage, qui est inséré entre deux longerons ( 3 ), qui entre dans une rainure ( 1b ) transversale des épaulements ( 1a ) en forme de C du support ( 1 ) du plancher et qui est empêché de tomber, par exemple par une vis ( 8 ) retenue dans le support ( 1 ) du plancher.

7. Plancher suivant l'une des revendications 1 à 6,
**caractérisé en ce qu'**une couche ( 9 ) en élastomère est mise entre les épaulements ( 1a ) du support ( 1 ) de plancher et le longeron ( 3 ).
